# EUROPEAN PATENT APPLICATION

(11) **EP 4 741 197 A1**
(43) Date of publication of application: **13.05.2026**
(21) Application number: 24211230.8
(22) Date of filing: 06.11.2024
(51) Int. Cl.: B60K 1/04

(54) **BATTERY PROTECTION ARRANGEMENT**

(71) Applicant: Volvo Truck Corporation, 405 08 Göteborg (SE)
(72) Inventor: SENA, Vinicius, 80610240 Curitiba (BR); ZONATTO, Eduardo, 80810350 Curitiba (BR); ADLERSON, Hans, 436 40 Askim (SE); AMIN, Gebran, 80320-040 Curitiba (BR)
(74) Representative: Kransell & Wennborg KB

(57) **Abstract**

A fastening arrangement (100) for fastening a deck plate (108) to a vehicle frame (104), the fastening arrangement comprising: a first bracket (102) connectable to the vehicle frame (104); a second bracket (106) connectable to the deck plate (108); an elastic socket (110) attached to one of the first and second bracket (102, 106), and a ball stud (112) comprising a straight end (114) and a ball end (116), the ball end being rotatably connected to the elastic socket and the straight end being connected to the one of the first and second bracket not comprising the elastic socket, such that the ball stud forms a connection between the first bracket and the second bracket.

## Description

### TECHNICAL FIELD

The disclosure relates generally to a battery protection arrangement. In particular aspects, the disclosure relates to battery protection arrangement in the form of a top cover plate also acting as a deck plate. The disclosure can be applied to heavy-duty vehicles, such as trucks, buses, construction equipment, and other vehicles or machines using deck plates. Although the disclosure may be described with respect to a particular vehicle, the disclosure is not restricted to any particular vehicle.

### BACKGROUND

Electric vehicles, particularly commercial vehicles, rely heavily on energy storage systems (ESS) to provide power for propulsion and other operational functions. As these systems typically consist of high-capacity battery packs, they require effective protection from external elements, physical damage, and operational stress. Mounting these energy storage systems securely to the vehicle frame is a crucial aspect of vehicle design, ensuring that they remain stable and functional during driving conditions, including exposure to vibrations, shocks, and torsional forces generated by the vehicle's movement.

In addition to structural considerations, safety regulations and industry standards impose strict requirements on the design and integration of ESS protection systems, including managing vibrations to prevent damage to sensitive battery components, minimizing the risk of electrical failure, and ensuring the longevity of the system under varying conditions. Protection systems must also be designed to allow for easy maintenance and accessibility, especially in production environments where rapid assembly and disassembly are essential for efficient manufacturing processes.

While various solutions exist to mount and protect energy storage systems, many currently available designs face limitations in balancing ease of assembly, vibration management, and aesthetic integration. These challenges may become particularly acute in larger vehicles, where multiple battery packs and configurations must be accommodated. As a result, there remains a need for improved protection systems that not only provide robust protection but also align with structural, technical, and design requirements.

### SUMMARY

According to a first aspect of the disclosure, there is provided a protection arrangement for an electric vehicle energy storage system, the protection arrangement comprising: a bracket, attachable to a frame of the vehicle, the bracket having an elongate opening; a resilient member arranged in the elongate opening of the bracket; and a protection element comprising a top plate and a lip arranged at an edge of and below a surface plane of the top plate, the lip being configured to slot into the elongate opening of the bracket so that the resilient member is located between the lip and the bracket to absorb vibrations between the protection element and the bracket.

A technical benefit of the described protection arrangement may include that the resilient member, positioned between the lip of the protection element and the bracket, effectively absorbs vibrations transmitted from the vehicle frame, thereby reducing impact on the energy storage system and improving its durability and operational reliability. The claimed protection arrangement also allows for a secure and stable attachment of the protection element to the vehicle frame through the lip-slot connection, ensuring consistent performance during vehicle operation. Additionally, the straightforward design enables efficient assembly, enhancing manufacturing efficiency while providing strong protection for the energy storage system.

Optionally in some examples, including in at least one preferred example, the protection arrangement comprises a fastening arrangement arranged at an opposite edge of the top plate from the lip and configured to attach the top plate to the vehicle frame. A technical benefit may include improved structural stability by securing the protection element at multiple points, thereby reducing movement and ensuring the element remains firmly attached to the vehicle frame during operation.

Optionally in some examples, including in at least one preferred example, the protection arrangement further comprises a cover lid arranged to cover the fastening arrangement such that the fastening arrangement is concealed. A technical benefit may include enhanced aesthetics and protection of the fastening elements from environmental exposure, such as moisture and dirt, which may increase the longevity of the fasteners and reduce maintenance requirements.

Optionally in some examples, including in at least one preferred example, the fastening arrangement comprises at least one opening, the at least one opening being configured to receive a fastener for connecting the fastening arrangement to the vehicle frame. A technical benefit may include ease of assembly and secure attachment through the use of fasteners, allowing for quick and reliable installation of the protection arrangement to the vehicle frame.

Optionally in some examples, including in at least one preferred example, the fastener is a detachable fastener allowing removal of the protection arrangement by removal of the fastener. A technical benefit may include ease of disassembly and maintenance, enabling the protection arrangement to be quickly removed for inspection or repair of the energy storage system without the need for complex tools or processes.

Optionally in some examples, including in at least one preferred example, the fastening arrangement comprises an anti-vibration fastener configured to reduce the transmission of vibrations from the vehicle frame to the protection element. A technical benefit may include reduced vibration transfer to the protection element, which may improve the longevity of the energy storage system by minimizing mechanical stress and noise caused by vibration.

Optionally in some examples, including in at least one preferred example, the top plate comprises an upper plate and a lower plate in a stacked arrangement, and the lip is formed by the lower plate. A technical benefit may include increased structural integrity by dividing the top plate into two layers, allowing the lower plate to support the lip while the upper plate contributes to overall strength and durability.

Optionally in some examples, including in at least one preferred example, the lower plate comprises an edge portion which is recessed in relation to the plane of the lower plate, thereby forming the lip as a gap between the lower plate and the upper plate. A technical benefit may include improved fitment and alignment during assembly, as the recessed edge and lip ensure secure engagement with the bracket, which enhances the stability and retention of the protection element.

Optionally in some examples, including in at least one preferred example, both the upper plate and the lower plate are made from plastic. A technical benefit may include reduced weight, which contributes to overall vehicle efficiency, and increased resistance to corrosion, particularly in environments where metal components may degrade.

Optionally in some examples, including in at least one preferred example, the lower plate is made from glass fiber reinforced plastic. A technical benefit may include improved mechanical strength and impact resistance, offering a lightweight yet durable material solution that enhances the protection of the energy storage system.

Optionally in some examples, including in at least one preferred example, the fastening arrangement is attached to the lower plate. A technical benefit may include concentrated load distribution on the lower plate, which can bear structural loads more effectively, ensuring that the fastening arrangement is secure and stable under dynamic conditions. Moreover, in embodiments where the lower plate is made from a fiber reinforced plastic, attaching the fastening arrangement to the reinforced lower plates provides additional structural stability.

Optionally in some examples, including in at least one preferred example, the upper plate is welded to the lower plate. A technical benefit may include increased structural rigidity, as welding the plates together creates a unified, robust assembly that can withstand external forces and vibration more effectively.

Optionally in some examples, including in at least one preferred example, the resilient member is U-shaped and arranged to have an opening of the U-shape facing the lip, so that the lip is gripped by the resilient member when inserted into the elongate opening of the bracket. A technical benefit may include enhanced retention of the lip within the bracket, providing additional stability and ensuring that the protection element remains securely in place, even under vibrations or movement.

Optionally in some examples, including in at least one preferred example, the resilient member is made from a rubber material configured to absorb noise and/or torsion. A technical benefit may include effective damping of vibrations, noise, and torsional forces, contributing to a quieter vehicle operation and preventing stress on the protection element and the energy storage system.

Optionally in some examples, including in at least one preferred example, the bracket is a metal bracket. A technical benefit may include increased strength and durability of the mounting structure, providing a stable and robust base for the protection element and the energy storage system, particularly under high loads and extreme conditions.

Optionally in some examples, including in at least one preferred example, the cover lid is configured to be manually attached to the protection arrangement without the use of tools. A technical benefit may include simplified assembly and maintenance, allowing the cover lid to be quickly and easily attached or removed by hand, which reduces downtime and the need for specialized tools.

Optionally in some examples, including in at least one preferred example, the fastening arrangement comprises a plurality of openings configured to receive fasteners, allowing the fastening arrangement to be attached to different configurations of a vehicle frame. A technical benefit may include increased versatility of the protection arrangement, as the multiple openings enable compatibility with various vehicle frame configurations, facilitating broader applicability across different vehicle models.

Optionally in some examples, including in at least one preferred example, the elongate opening and the resilient member are configured to accommodate variations in manufacturing tolerances. A technical benefit may include improved manufacturing flexibility, as the design allows for slight variations in component dimensions without compromising the secure fit or function of the protection arrangement, leading to more efficient production.

According to a second aspect, there is provided a vehicle comprising a vehicle frame, an energy storage system, and a protection arrangement according to any one of the above examples connected to the vehicle frame and arranged to cover the energy storage system. A technical benefit may include comprehensive protection of the energy storage system within the vehicle, reducing exposure to external damage and enhancing the system's operational reliability.

Optionally in some examples, including in at least one preferred example, the top plate is configured to be attached to a chassis fairing structure of the vehicle frame. A technical benefit may include improved integration of the protection arrangement with the overall vehicle structure, contributing to aerodynamic efficiency and ensuring that the protection element does not interfere with other vehicle components.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary illustration of a protection arrangement according to an example.
**FIG. 2** is an exemplary illustration of details of a protection arrangement according to an example.
**FIG. 3** is an exemplary illustration of details of a protection arrangement according to an example.
**FIGS. 4A-B** are exemplary illustrations of details of a protection arrangement according to an example.
**FIG. 5** is an exemplary illustration of a vehicle comprising a fastening arrangement according to an example.
**FIG. 6** is an exemplary illustration of a protection arrangement according to an example.
**FIG. 7** is an exemplary illustration of a protection arrangement according to an example.

### DETAILED DESCRIPTION

The detailed description set forth below provides information and examples of the disclosed technology with sufficient detail to enable those skilled in the art to practice the disclosure.

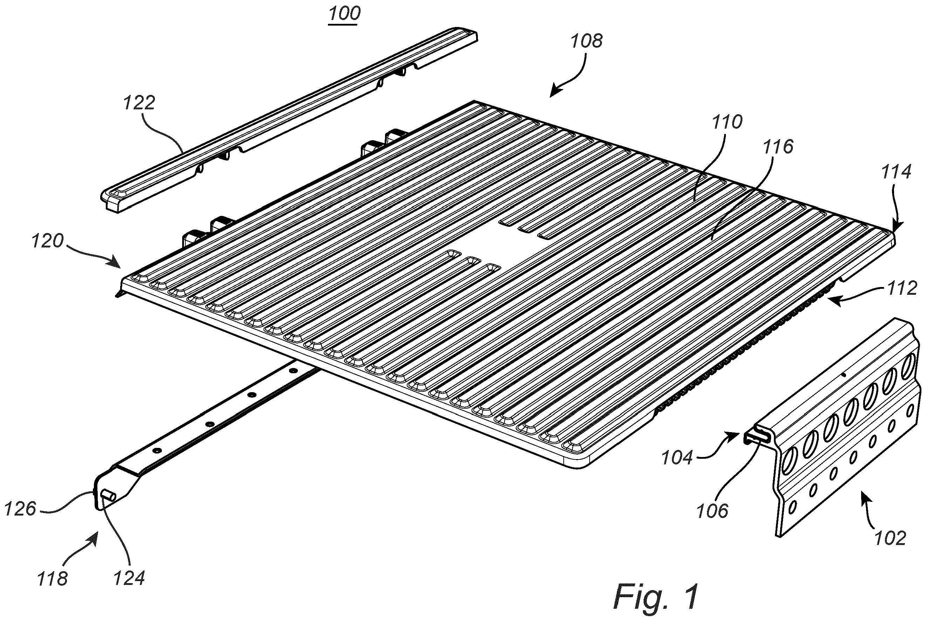

FIG. 1 is an exemplary illustration of a protection arrangement 100 for an electric vehicle energy storage system. The protection arrangement 100 comprises a bracket 102, attachable to a frame of a vehicle, the bracket 102 having an elongate opening 104 and a resilient member 106 arranged in the elongate opening 104 of the bracket 102. The protection arrangement 100 further comprises a protection element 108 comprising a top plate 110 and a lip 112 arranged at an edge 114 of and below a surface plane 116 of the top plate 110, the lip 112 being configured to slot into the elongate opening 104 of the bracket 102 so that the resilient member 106 is located between the lip 112 and the bracket 102 to absorb vibrations between the protection element 108 and the bracket 102.

The bracket 102 may be a metal bracket configured to connect and attach the protection arrangement 100 to a frame of the vehicle so that the protection arrangement 100 covers an energy storage system, such as a battery, of a vehicle. As illustrated in Fig. 1, the elongate opening 104 of the bracket 102 may be a U-shaped open ended opening 104 aligned horizontally along the length extension of the bracket 102. That the elongate opening 104 is open ended allows for both easy installation as well as adaptation to manufacturing tolerances in the protection arrangement 100, meaning that the lip 112 of the top plate 110 can be larger, i.e. longer, than the opening and that the top plate can be adjusted in a sideways direction when being installed.

Moreover, the surface plane 116 of the top plate 110 is the upper surface of the top plate 110 which is the horizontal plane when the protection arrangement 100 is mounted on a vehicle. The surface plane 116 of the top plate 110 is thereby configured to be exposed as part of the exterior of the vehicle. The top plate 110 has a substantially rectangular shape and an edge 114 of the top plate is thereby one of the sides of the rectangle.

According to the example illustrated in Fig. 1, the protection arrangement 100 further comprises a fastening arrangement 118 arranged at an opposite edge 120 of the top plate 110 from the lip 112, where the fastening arrangement 118 is configured to attach the top plate 110 to the vehicle frame. The bracket 102 and the fastening arrangement 118 thereby connect the protection arrangement 100 to different parts of the vehicle frame so that the protection arrangement 100 may cover e.g. a battery arranged in the vehicle between the bracket and the fastening arrangement 118. The protection arrangement 100 further comprises a cover lid 122 arranged to cover the fastening arrangement 118 such that the fastening arrangement 118 is concealed, i.e. hidden from view when the protection arrangement 100 is installed in a vehicle. In some examples, the cover lid 122 is configured to be manually attached to the protection arrangement without the use of tools.

The fastening arrangement 118 may further comprise at least one opening 124 being configured to receive a fastener 126 for connecting the fastening arrangement 118 to the vehicle frame. According to an example, the fastening arrangement 118 comprises a plurality of openings configured to receive fasteners, allowing the fastening arrangement to be attached to different configurations of a vehicle frame.

Moreover, the fastener 126 may be a detachable fastener such as a screw, a bolt or the like allowing removal of the protection arrangement by removal of the fastener. For example, the fastener may be an anti-vibration fastener configured to reduce the transmission of vibrations from the vehicle frame to the protection element 108.

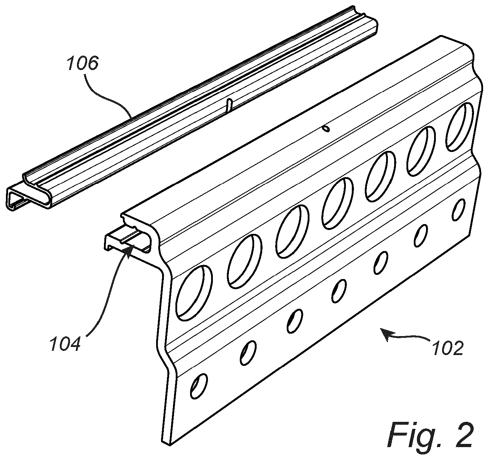

In the illustrated example, as shown in further detail in Fig. 2, the resilient member 106 is U-shaped and arranged to have an opening of the U-shape facing the lip 112, so that the lip 112 is gripped by the resilient member 106 when the lip 112 is inserted into the elongate opening 104 of the bracket 102. The resilient member 106 may be made from a rubber material configured to absorb vibrations and torsion, and to reduce noise.

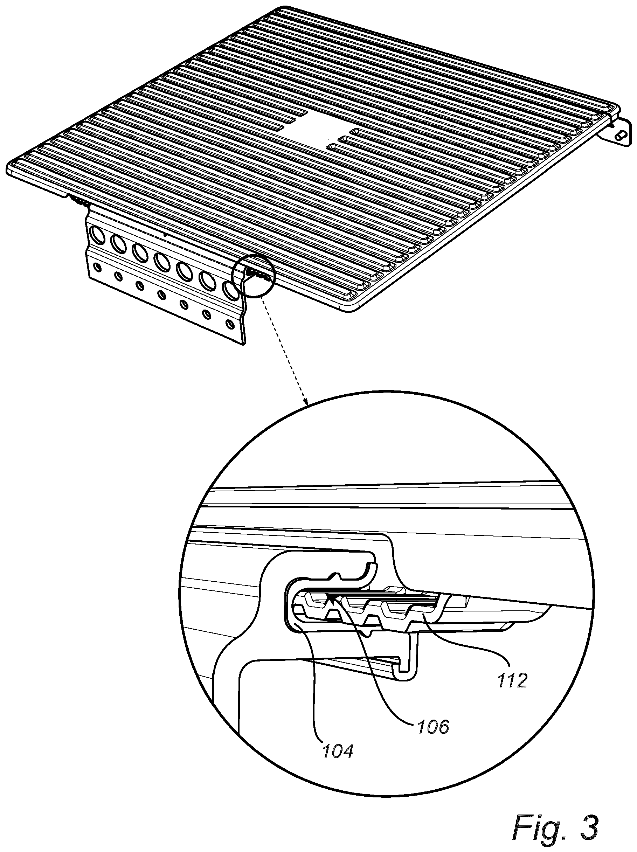

Fig. 3 schematically illustrates the lip 112 of the protection element 108 being inserted into the elongate opening 104 of the bracket 102. The vertical opening of the resilient member 106 may be somewhat smaller than the thickness of the lip 112 so that the resilient member 106 is compressed when the lip 112 is inserted into the opening 104. The lip is thereby securely held in place in the bracket 102 by the resilient member 106.

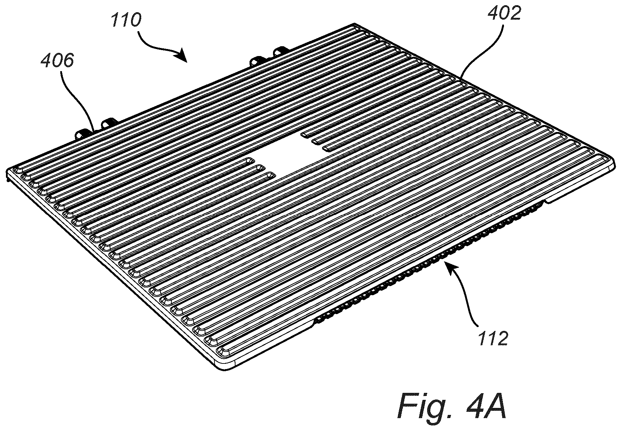

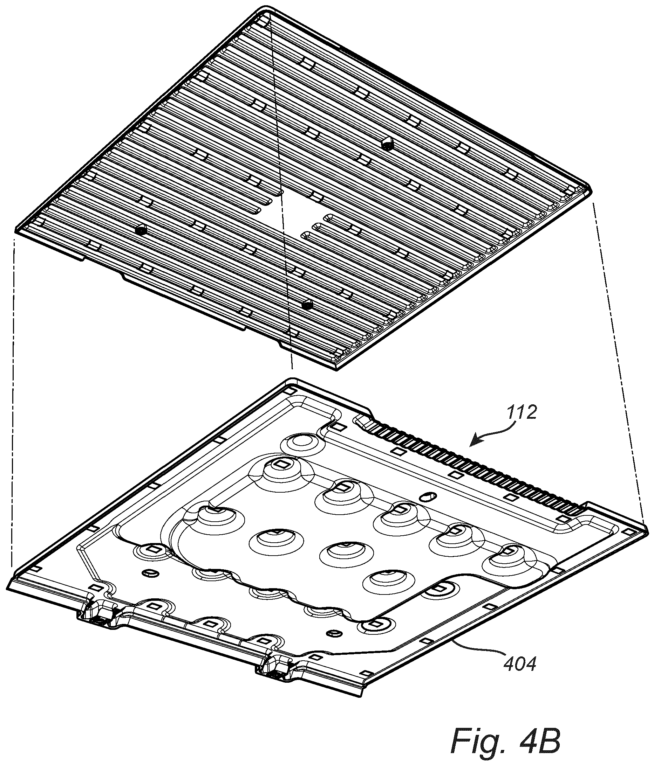

FIGS. 4A-B provide a detailed view of an example where the top plate 110 comprises an upper plate 402 and a lower plate 404 in a stacked arrangement, and wherein the lip 112 is formed by the lower plate. To form the lip 112, the lower plate 404 comprises an edge portion which is recessed in relation to the plane of the lower plate 404, thereby forming the lip as a gap between the lower plate 404 and the upper plate 402. In some examples, both the upper plate 402 and the lower plate 404 are made from plastic, and the lower plate 404 is made from glass fiber reinforced plastic. Moreover, the upper plate 402 may be welded to the lower plate 404 to together form the top plate 110.

In some examples, the fastening arrangement 118 is attached to the lower plate 404 which may be particularly advantageous when the lower plate 404 is made from a fiber reinforced plastic. The lower plate 404 can thereby be provided with attachment means such as bolt holes 406 for receiving an attaching bolt.

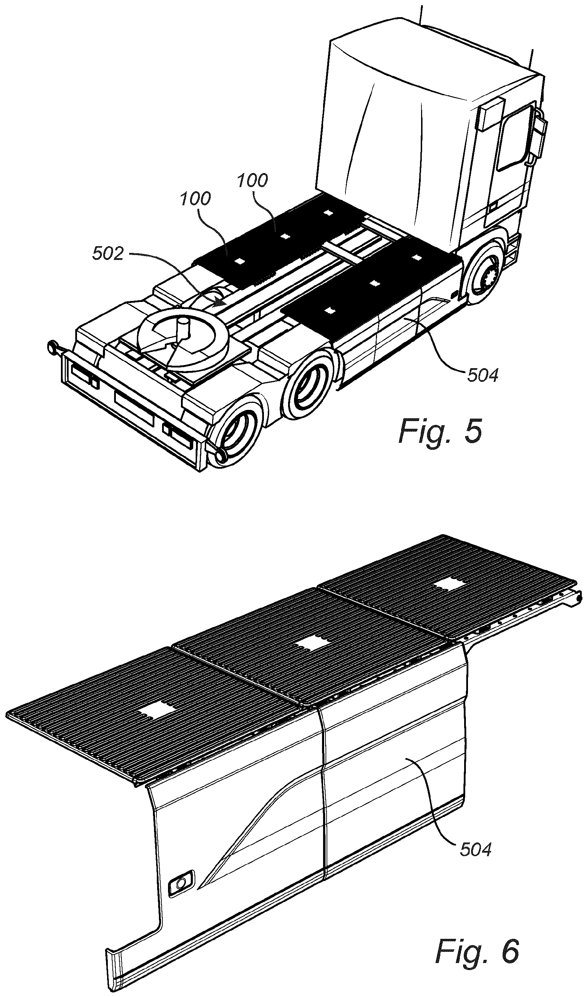

FIG. 5 schematically illustrates a vehicle 500 comprising a protection arrangement 100 according to any of the above described examples. The vehicle comprises a vehicle frame 502 as shown in Fig. 5 to which the protection arrangement 100 is attached. The top plate 110 of the protection arrangement 100 may further be configured to be attached to a chassis faring structure 504 of the vehicle frame 502 as illustrated in further detail in Fig. 6.

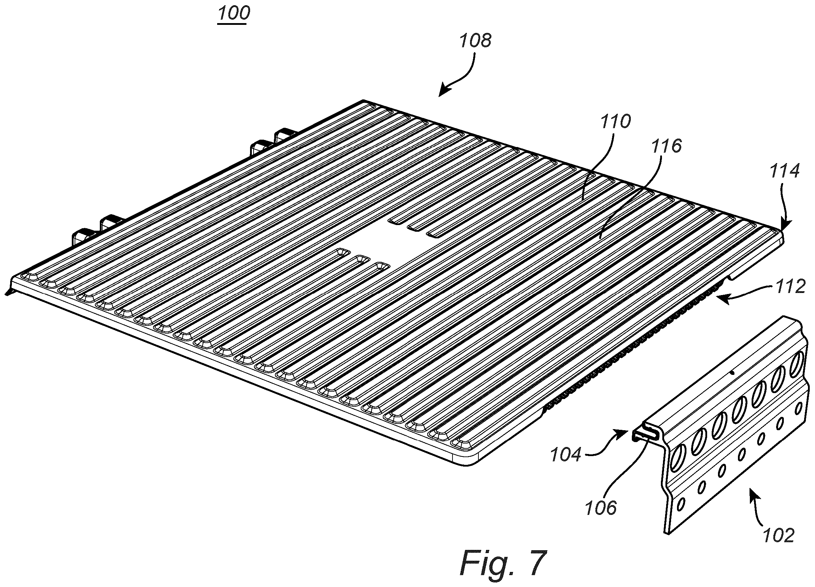

FIG. 7 is a protection arrangement 100 for an electric vehicle energy storage system, the protection arrangement comprising: a bracket 102, attachable to a vehicle frame 502, the bracket 102 having an elongate opening 104; a resilient member 106 arranged in the elongate opening of the bracket; and a protection element 108 comprising a top plate 110 and a lip 112 arranged at an edge 114 of and below a surface plane 116 of the top plate 110, the lip 112 being configured to slot into the elongate opening 104 of the bracket 102 so that the resilient member 106 is located between the lip 112 and the bracket 102 to absorb vibrations between the protection element 108 and the bracket 102.

Example 1. A protection arrangement (100) for an electric vehicle energy storage system, the protection arrangement comprising: a bracket (102), attachable to a frame (502) of the vehicle, the bracket having an elongate opening (104); a resilient member (106) arranged in the elongate opening of the bracket; and a protection element (108) comprising a top plate (110) and a lip (112) arranged at an edge (114) of and below a surface plane (116) of the top plate, the lip being configured to slot into the elongate opening of the bracket so that the resilient member is located between the lip and the bracket to absorb vibrations between the protection element and the bracket.

Example 2. The protection arrangement according to example 1, wherein the protection arrangement comprises a fastening arrangement (118) arranged at an opposite edge (120) of the top plate from the lip (112) and configured to attach the top plate (110) to the vehicle frame (502).

Example 3. The protection arrangement (100) according to example 2, further comprising a cover lid (122) arranged to cover the fastening arrangement (118) such that the fastening arrangement (118) is concealed.

Example 4. The protection arrangement (100) according to example 2 or 3, wherein the fastening arrangement comprises at least one opening (124), the at least one opening (124) being configured to receive a fastener (126) for connecting the fastening arrangement to the vehicle frame.

Example 5. The protection arrangement according to example 4, wherein the fastener is a detachable fastener allowing removal of the protection arrangement by removal of the fastener.

Example 6. The protection arrangement according to any one of examples 2 to 5, wherein the fastening arrangement comprises an anti-vibration fastener configured to reduce the transmission of vibrations from the vehicle frame to the protection element.

Example 7. The protection arrangement according to any one of the preceding examples, wherein the top plate (110) comprises an upper plate (402) and a lower plate (404) in a stacked arrangement, and wherein the lip is formed by the lower plate.

Example 8. The protection arrangement according to example 7, wherein the lower plate comprises an edge portion which is recessed in relation to the plane of the lower plate, thereby forming the lip as a gap between the lower plate and the upper plate.

Example 9. The protection arrangement according to example 7 or 8, wherein both the upper plate and the lower plate is made from plastic.

Example 10. The protection arrangement according to example 9, wherein the lower plate is made from glass fiber reinforced plastic.

Example 11. The protection arrangement according to any one of examples 7 to 10, wherein the fastening arrangement is attached to the lower plate.

Example 12. The protection arrangement according to any one of examples 7 to 11, wherein the upper plate is welded to the lower plate.

Example 13. The protection arrangement according to any one of the preceding examples, wherein the resilient member is U-shaped and arranged to have an opening of eh U-shape facing the lip, so that the lip is gripped by the resilient member when inserted into the elongate opening of the bracket.

Example 14. The protection arrangement according to any one of the preceding examples, wherein the resilient member is made from a rubber material configured to absorb noise and/or torsion.

Example 15. The protection arrangement according to any one of the preceding examples, wherein the bracket is a metal bracket.

Example 16. The protection arrangement according to any one of the preceding examples, wherein the cover lid is configured to be manually attached to the protection arrangement without the use of tools.

Example 17. The protection arrangement according to any one of the preceding examples, wherein the fastening arrangement comprises a plurality of openings configured to receive fasteners, allowing the fastening arrangement to be attached to different configurations of a vehicle frame.

Example 18. The protection arrangement according to any one of the preceding examples, wherein the elongate opening and the resilient member is configured to accommodate variations in manufacturing tolerances.

Example 19. A vehicle (500) comprising: a vehicle frame (502); an energy storage system; and a protection arrangement (100) according to any one of the preceding examples connected to the vehicle frame and arranged to cover the energy storage system.

Example 20. The vehicle according to example 19, wherein the top plate is configured to be attached to a chassis faring structure (504) of the vehicle frame.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A protection arrangement (100) for an electric vehicle energy storage system, the protection arrangement comprising:
a bracket (102), attachable to a frame (502) of the vehicle, the bracket having an elongate opening (104);
a resilient member (106) arranged in the elongate opening of the bracket; and
a protection element (108) comprising a top plate (110) and a lip (112) arranged at an edge (114) of and below a surface plane (116) of the top plate, the lip being configured to slot into the elongate opening of the bracket so that the resilient member is located between the lip and the bracket to absorb vibrations between the protection element and the bracket.

2. The protection arrangement according to claim 1, wherein the protection arrangement comprises a fastening arrangement (118) arranged at an opposite edge (120) of the top plate from the lip (112) and configured to attach the top plate (110) to the vehicle frame (502).

3. The protection arrangement (100) according to claim 2, further comprising a cover lid (122) arranged to cover the fastening arrangement (118) such that the fastening arrangement (118) is concealed.

4. The protection arrangement (100) according to claim 2 or 3, wherein the fastening arrangement comprises at least one opening (124), the at least one opening (124) being configured to receive a fastener (126) for connecting the fastening arrangement to the vehicle frame.

5. The protection arrangement according to claim 4, wherein the fastener is a detachable fastener allowing removal of the protection arrangement by removal of the fastener.

6. The protection arrangement according to any one of claims 2 to 5, wherein the fastening arrangement comprises an anti-vibration fastener configured to reduce the transmission of vibrations from the vehicle frame to the protection element.

7. The protection arrangement according to any one of the preceding claims, wherein the top plate (110) comprises an upper plate (402) and a lower plate (404) in a stacked arrangement, and wherein the lip is formed by the lower plate.

8. The protection arrangement according to claim 7, wherein the lower plate comprises an edge portion which is recessed in relation to the plane of the lower plate, thereby forming the lip as a gap between the lower plate and the upper plate.

9. The protection arrangement according to claim 7 or 8, wherein both the upper plate and the lower plate is made from plastic.

10. The protection arrangement according to claim 9, wherein the lower plate is made from glass fiber reinforced plastic.

11. The protection arrangement according to any one of claims 7 to 10, wherein the upper plate is welded to the lower plate.

12. The protection arrangement according to any one of the preceding claims, wherein the resilient member is U-shaped and arranged to have an opening of eh U-shape facing the lip, so that the lip is gripped by the resilient member when inserted into the elongate opening of the bracket.

13. The protection arrangement according to any one of the preceding claims, wherein the resilient member is made from a rubber material configured to absorb noise and/or torsion.

14. A vehicle (500) comprising:
a vehicle frame (502);
an energy storage system; and
a protection arrangement (100) according to any one of the preceding claims connected to the vehicle frame and arranged to cover the energy storage system.

15. The vehicle according to claim 14, wherein the top plate is configured to be attached to a chassis faring structure (504) of the vehicle frame.
